# EUROPEAN PATENT APPLICATION

(11) **EP 4 186 865 A1**
(43) Date of publication of application: **31.05.2023**
(21) Application number: 21210780.9
(22) Date of filing: 26.11.2021
(51) Int. Cl.: C01G 23/00, C01G 25/00, C01G 27/00, C01G 31/00, C01G 33/00, C01G 35/00

(54) **A METHOD FOR MANUFACTURING A CRYSTALLINE OXIDIC COMPOUND**

(71) Applicant: Karlsruher Institut für Technologie, 76131 Karlsruhe (DE)
(72) Inventor: Mereacre, Valeriu, 76297 Stutensee (DE); Binder, Joachim, 76227 Karlsruhe (DE); Ehrenberg, Helmut, 64291 Darmstadt (DE)
(74) Representative: Altmann Stößel Dick Patentanwälte PartG mbB

(57) **Abstract**

The present invention relates to a method for manufacturing a crystalline oxidic compound comprising an alkaline metal and a valve metal, to a crystalline oxidic compound as obtained by the method, and to its use as a ferroelectric material; as a coating material for electrode materials in batteries, specifically in solid-state batteries; or in digital printing, especially on a polymeric substrate.

Herein, the method for manufacturing a crystalline oxidic compound comprising an alkaline metal and a valve metal comprises the following steps:
a) mixing an alcoholate of an alkaline metal and an alcoholate of a valve metal in a composition of an oxygenated organic solvent and hydrogen peroxide at room temperature;
b) adding an acid selected from at least one of nitric acid or hydrochloric acid at room temperature, whereby a solution is obtained;
c) drying the solution at an elevated temperature of 50 °C to 150 °C, whereby a powder comprising the at least one crystalline oxidic compound comprising the alkaline metal and the valve metal is obtained.

This manufacturing method operates at a low ambient working temperature, especially below 200 °C, and, thus, allows a direct manufacturing of crystalline oxidic compounds without interaction with a substrate and/or on a substrate which is not capable of tolerating higher temperatures during the manufacturing of crystalline oxidic compounds without deformation and/or deterioration. A further advantage of the low ambient working temperature is that a diffusion of elements from the at least one crystalline oxidic compound as coating material into the substrate can be avoided.

## Description

### Field of the invention

The present invention relates to a method for manufacturing a crystalline oxidic compound comprising an alkaline metal and a valve metal, to a crystalline oxidic compound as obtained by the method, and to its use, in particular as a ferroelectric material; as a coating material for electrode materials in batteries, specifically in solid-state batteries; or in digital printing, especially on a polymeric substrate.

### Related art

Crystalline oxidic compounds which comprise an alkaline metal, such as Li, and a valve metal, such as Nb, are known as coating materials. By way of example, a coating layer which comprises crystalline lithium niobate (LiNbO₃) can be used for protecting a cathode active material from adverse effects resulting from a direct contact with an adjacent electrolyte, thereby enhancing a stability of the cathode active material.

Various methods for manufacturing such kinds of crystalline oxidic compounds are also known, preferably selected from solid state reactions and sol-gel methods; as disclosed in Zhang, Z.-J.; Chou, S.-L.; Gu, Q.-F.; Liu, H.-K.; Li, H.-J.; Ozawa, K.; Wang, J.-Z., Enhancing the high rate capability and cycling stability of LiMn2O4 by coating of solid-state electrolyte LiNbO3, ACS Appl. Mater. Interfaces 2014, 6, 2215fr22165; Sun, W.; Xie, M.; Shi, X.; Zhang, L., Study of new phases grown on LiNbO3 coated LiCoO2 cathode material with an enhanced electrochemical performance, Materials Research Bulletin, 2015, 61, 287-291; or Kim, H.; Byun, D.; Chang, W.; Jung, H.-G.; Choi, W., A nano-LiNbO3 coating layer and diffusion-induced surface control towards high-performance 5 V spinel cathodes for rechargeable batteries, J. Mater. Chem. A 2017, 5, 25077-25089.

Mereacre, V.; Stüble, P.; Ghamlouche A.; and Binder, J. R.; Enhancing the Stability of LiNi0.5Mn1.5O4 by Coating with LiNbO3 Solid-State Electrolyte: Novel Chemically Activated Coating Process versus Sol-Gel Method, Nanomaterials 2021, 11, 548, describe a fabrication of LiNbO₃-coated LiNi_{0.5}Mn_{1.5}O₄ spinel by applying two different kinds of methods, i.e. using hydrogen peroxide as activating agent and a sol-gel method.

These state-of-the-art solutions require high temperatures of approx. 350 °C to 900°C to obtain the crystalline LiNbO₃ coating layer. As documented by Sun, X.; Hori, S.; Li, Y.; Yamada, Y.; Suzuki, K.; Hirayama, M.; Kanno, R., Annealing-Induced Evolution at the LiCoO2/LiNbO3 Interface and its Functions in All-Solid-State Batteries with a Li10GeP2S12 Electrolyte, J. Mater. Chem. A 2021, 9, 4117-4125, by using high annealing temperatures the deposition of the crystalline LiNbO₃ coating layer can be accompanied by a diffusion of an amount of Nb ions into a surface of active material, or vice versa, of elements from the active materials into the lattice of the LiNbO₃ coating layer. Although the diffusion may improve a cycling retention of batteries that use organic liquid electrolytes, the diffusion can also be responsible for a capacity degradation of the cathode active material.

Alternatively, LiNbO₃ can be manufactured by using a further deposition process, especially atomic layer deposition (ALD), as disclosed by Østreng, E.; Sønsteby, H. H.; Sajavaara, T.; Nilsen, O.; Fjellvåg, H., Atomic layer deposition of ferroelectric LiNbO3, J. Mater. Chem. C, 2013, 1, 4283-4290. Although ALD allows obtaining very thin and homogeneous layers, ALD is rather sophisticated and comprehensive to scale up. In addition, ALD requires high temperatures not only for the deposition process (at approx. 235 °C) but also for the crystallization of the deposited LiNbO₃ layer (at approx. 650 °C).

### Problem to be solved

It is therefore an objective of the present invention to provide a method for manufacturing a crystalline oxidic compound comprising an alkaline metal and a valve metal, a crystalline oxidic compound as obtained by the method, and its use, which at least partially overcome the above-mentioned problems of the state of the art.

It is a particular objective of the present invention to provide a straightforward and reliable method for manufacturing such kinds of crystalline oxidic compounds which does not require any complex arrangement. More particular, the objective refers to a manufacturing method for such kinds of crystalline oxidic compounds which operates at a low ambient working temperature, especially below 200 °C, to allow a direct manufacturing of this kind of crystalline oxidic compounds without interaction with a substrate and/or on a substrate which is not capable of tolerating higher temperatures during the manufacturing of such kinds of crystalline oxidic compounds without deformation and/or deterioration.

Further, the manufacturing method should be capable of providing such kinds of crystalline oxidic compounds which may be homogeneous and stable and may remain in permanent and tight contact with a selected substrate, in particular as a coating material or in digital printing.

### Summary of the invention

This problem is solved by a method for manufacturing a crystalline oxidic compound comprising an alkaline metal and a valve metal, a crystalline oxidic compound as obtained by the method, and its use having the features of the independent claims. Preferred embodiments, which might be implemented in an isolated fashion or in any arbitrary combination, are listed in the dependent claims.

In a first aspect, the present invention relates to a method for manufacturing a crystalline oxidic compound comprising an alkaline metal and a valve metal. Accordingly, this method comprises the following steps a) to c):
a) mixing an alcoholate of an alkaline metal and an alcoholate of a valve metal in a composition of an oxygenated organic solvent and hydrogen peroxide at room temperature;
b) adding an acid selected from at least one of nitric acid or hydrochloric acid at room temperature, whereby a solution is obtained;
c) drying the solution at an elevated temperature of 50 °C to 150 °C, whereby a powder comprising the at least one crystalline oxidic compound comprising the alkaline metal and the valve metal is obtained.

Herein, the indicated steps a) to c) may, preferably, be performed in the given order, commencing with step a), continuing with step b), and finishing with step c). However, any or all of the indicated steps may be performed concurrently at least in part and/or be repeated several times. Further steps, whether described herein or not, can, in addition, also be performed in relationship with the present method.

As generally used, the term "manufacturing" refers to producing a particular substance, independent of the amount of the substance being produced by this method and independent whether the substance is produced in a manual manner or in an automatic fashion, in a single preparation, batch-wise or in an continuous manner.

As further generally used, the term "compound" refers to a type of substance which comprises at least two individual components, specifically at least two different kinds of atoms or ions selected from the periodic table of chemical elements. Further, the term "oxidic compound" refers to a particular kind of compound which comprises oxygen as one of the chemical elements. By way of example, the oxidic compound LiNbO₃ comprises lithium, niobium, and oxygen; however, various further examples are known.

In accordance with the present invention, the oxidic compound to be produced by the present manufacturing method comprises both, firstly, an alkaline metal and, secondly, a valve metal. As used herein, the term "alkaline metal" refers to a group 1 element of the periodic table apart from francium (Fr), i.e. lithium (Li), sodium (Na), potassium (K), rubidium (Rb), and cesium (Cs), wherein lithium (Li), sodium (Na), and potassium (K) are preferred, wherein lithium (Li) and sodium (Na) are more preferred, wherein lithium (Li) is particularly preferred. As further used herein, the term "valve metal" refers to an element of the periodic table selected from the group consisting of niobium (Nb), titanium (Ti), tantalum (Ta), zirconium (Zr), hafnium (Hf), and vanadium (V), aluminum (Al), chromium (Cr), tungsten (W), wherein niobium (Nb), titanium (Ti), tantalum (Ta), zirconium (Zr), hafnium (Hf), and vanadium (V) are preferred, wherein niobium (Nb) is particularly preferred. By way of example, the oxidic compound LiNbO₃ comprises the alkaline metal lithium and the valve metal niobium apart from oxygen; however, various further examples are known.

As further generally used, the term "crystalline oxidic compound" refers to a substance which is present in form of at least one type of crystals. As generally used, the term "crystalline" refers to state of the substance in which the at least one individual component, specifically at least one kind of atom or ion, is arranged in a far-reaching ordered structure, whereby a crystal lattice extending in at least one spatial direction is generated. Herein, the presence of a crystalline state can be demonstrated by an appearance of typical diffraction reflexes in an x-ray diffractometric pattern, often abbreviated to "XRD pattern". In contrast hereto, no diffraction reflexes can be determined in an XRD pattern for a substance assuming an amorphous state, in which the at least two individual components, specifically the at least two different kinds of atoms or ions, are arranged not more than in a near-reaching ordered structure, if any.

In general, the crystalline oxidic compound may be a single-phase crystalline oxidic compound or may comprise at least two individual phases of the crystalline oxidic compound. As generally used, the term "phase" refers to a particular type of crystalline structure having a definite composition of one or more individual components. By way of example, the oxidic compound which comprises lithium, niobium, and oxygen can assume a first phase denoted as LiNbO₃ but also a second phase denoted as LiNb₃O₈; further examples are known. The manufacturing method as presented herein can, in principle, be configured to produce either phase or a mixture thereof.

According to step a), an alcoholate of an alkaline metal and an alcoholate of a valve metal are mixed in a composition of an oxygenated organic solvent and hydrogen peroxide at room temperature. As generally used, the term "mixing" or any grammatical variation thereof refers to a process of bringing at least two individual substances close together, especially to induce between the at least two individual substances a physical interaction, specifically a solution of at least one substance in at least one further substance, and/or a chemical reaction, specifically for producing at least one further substance. According to the present invention, both a physical interaction and a chemical reaction are induced during step a).

As generally used, the term "alcoholate" refers to a basic compound having a sum formula of CₙH₂ₙ₊₁O to which the corresponding metal is added. Preferably, the alcoholate can be selected from an ethoxide, a methoxide or an isopropoxide; however further types of alcoholates are also feasible. Herein, the alcoholate of the alkaline metal and the alcoholate of the valve metal may, preferably, be mixed in a molar ratio for Li:Nb of 2.00:1.00 to 0.50:1:00, more preferred of 1.50:1.00 to 0.75:1.00, in particular of 1.25:1.00 to 0.80: 1.00; however using a different molar ratio for Li:Nb may also be feasible. Herein, the molar ratio for Li:Nb can, preferably, be adjusted for obtaining at least one particular crystalline phase or a mixture of different crystalline phases of the desired crystalline oxidic compound. As an advantage, using different types of alcoholate allows solving the corresponding metal ion in an oxygenated organic solvent or a composition comprising at least one oxygenated organic solvent. As further generally used, the term "oxygenated organic solvent" refers to an organic solvent which comprises oxygen in chemically bound form. In particular, the oxygenated organic solvent may be selected from at least one of an alcohol, a ketone, or an ether, wherein the alcohol may, preferably, be ethanol, methanol, isopropanol, and n-propanol, while the ketone may, preferably, be acetylacetone. However, a further kind of oxygenated organic solvent, specifically a further kind of alcohols, may also be feasible.

In addition, the composition, which is used in step a) as a solvent for both types of alcoholates, further, comprises hydrogen peroxide as an activating agent. As generally used, the term "activating agent" refers to a type of substance which is suitable for inducing or enhancing a particular reaction. Preferably, an aqueous solution comprising 10 to 50 molar %, more preferred 25 to 40 molar %, in particular 30 molar %, of hydrogen peroxide may be used for this purpose; however a different concentration of hydrogen peroxide in the solution may also be feasible. Specifically, the composition which is provided at step a) may, preferably, comprise the oxygenated organic solvent and the hydrogen peroxide in a volume ratio of 5:1 to 0.2:1, more preferred of 2:1 to 0.5 to 1, in particular 1:1; however a different ratio may also be feasible.

According to step b), an acid is added to the mixture of the alcoholate of the alkaline metal and the alcoholate of the valve metal in the composition of the oxygenated organic solvent and the hydrogen peroxide. As generally used, the term "adding" or any grammatical variation thereof refers to a process of introducing a further substance into an already existing mixture. According to the present invention, the acid is a strong acid. As used herein, the term "strong acid" refers to an acid having a high tendency to dissociate into a proton and a corresponding anion, specifically having a pKₛ value below 0. As generally used, the term "acid dissociation constant", abbreviated to "pKₛ value", constitutes a quantitative measure of the strength of an acid in solution. In particular, the strong acid is selected from nitric acid and/or hydrochloric acid, while other strong acids, such as sulfuric acid, seem to be less suited for the method according to the present invention.

Preferably, only a small amount of 0.1 vol. % to 10 vol. %, more preferred of 0.2 vol. % to 5 vol. %, in particular of 0.5 vol. % to 2 vol. %, of the strong acid is added to the mixture of both types of alcoholates in the composition of the oxygenated organic solvent and the hydrogen peroxide at step b). As result thereof, a solution, which already comprises the desired oxidic compound, is obtained. In a preferred embodiment, the solution may be a clear solution, thereby indicating that it may only comprise at least one phase of the desired oxidic compound in a soluble form.

According to step c), the solution, which already comprises the desired oxidic compound, is dried at an elevated temperature. As generally used, the term "drying" or any grammatical variation thereof refers to a process of removing a liquid component from a mixture, especially by applying a thermal treatment to the mixture. As a result, a powder, which comprises the at least one crystalline oxidic compound comprising the alkaline metal and the valve metal, is obtained in this manner.

According to the present invention, both steps a) and b), i.e. the mixing of the alcoholate of the alkaline metal and the alcoholate of the valve metal in the composition of the oxygenated organic solvent and hydrogen peroxide as well as the adding of the strong acid thereto, is performed at room temperature. As used herein, the term "room temperature" refers to a temperature of 5 °C to 40 °C, preferably of 10 °C to 30 °C, more preferred of 15 °C to 25 °C, in particular of 20 °C, which is prevailing during steps a) and b) while the corresponding physical interactions and chemical reactions are performed.

As preferred, step b) may be performed in a subsequent manner with respect to step a), i.e. after step a) has been completed. However, in an alternative embodiment, it may also be feasible to commence with step b) prior to a completion of step a), i.e. steps a) and b) may be performed in a partially concurrent manner. In this fashion, the adding of the strong acid can be distributed over a longer period of time without increasing the overall time required for performing the method.

Further according to the present invention, step c) is performed at an elevated temperature, wherein the elevated temperature is of 50 °C to 150 °C, preferably of 60 °C to 120 °C, more preferred of 75 °C to 100 °C, in particular of 80 °C to 90° C.

As preferred, step c) may be performed in a subsequent manner with respect to step b), i.e. after step b) has been completed. In this fashion, steps a) and b) can be performed at room temperature while the elevated temperature may only operate on the solution for a purpose of drying, thereby leaving the physical interactions and the chemical reactions which are executed during steps a) and b) undisturbed.

Summarizing, the whole manufacturing of the desired crystalline oxidic compounds operates - in contrast to the prior art methods - at a low ambient working temperature, especially below 200 °C. As a result, this kind of crystalline oxidic compounds can be manufactured without interaction with a substrate that may be in contact with the solution or with any other substance used for producing the solution, accordingly. As used herein, the term "substrate" refers to any kind of material having a surface on which the solution can be deposited to generate the crystalline oxidic compound. Preferably, the substrate may be selected from a solid body, in particular an electrode material in a battery, especially a cathode active material, or a polymeric substrate. As an alternative, the substrate may, preferably, be selected from a powdery substance having a plurality of particles, which can be coated by drying the solution at an elevated temperature according to step c).

In general, the low ambient working temperature does not influence a structure of the substrate and diffusion of elements from the substrate into crystalline oxidic compound can be avoided. As a result, the crystalline oxidic compound can be deposited on a substrate in a coating process, whereby a coating layer deposited on the substrate can be obtained. In a first embodiment, the coating layer may only be configured to protect the substrate, whose properties may remain undisturbed by the coating layer. In an alternative embodiment, the crystalline oxidic compound can be deposited on the substrate in a fashion that the surface of the substrates will, thereby, be activated, firstly, and, subsequently or concurrently, be coated. Herein, the alternative embodiment may facilitate achieving more stable coatings, especially owing to an increased contact between the coating and the substrate.

Further, the crystalline oxidic compounds can, in a preferred embodiment, be manufactured on a substrate, which may, especially due to increased reactiveness and/or instability at higher temperatures, not be capable of tolerating higher temperatures, especially of 200 °C or above, without deformation and/or deterioration during a manufacturing process. Consequently, the method as proposed herein may allow depositing at least one crystalline oxidic compound as a coating on a further range of substrates. Herein the substrate may, especially, be or comprise a polymeric semiconducting substrate, however, a further polymeric material, such as a natural polymer or a synthetic polymer, can also be coated by using the method as proposed herein.

In a particular embodiment, the solution may be applied to selective sites on a surface of a substrate by using a printing device. As used herein, the term "applying" or any grammatical variation thereof refers to a process of placing a portion of a substance to a surface of a substrate, which can also be considered as a type of "printing process". As generally used, the term "printing device" refers to an apparatus which is configured to place the portion of the substance to the surface of the substrate, thereby exerting digital printing. In particular, the solution can be considered as a type of ink, such that a type of ink jet may be used for digital printing.

In this particular embodiment, applying the solution to the surface of the substrate may, especially, be performed prior to step c), in particular during step b) or, preferably, after step b), or during step c). As a result, a pattern of the crystalline oxidic may be formed on the selective sites on the surface of the substrate after drying the solution at step c). As used herein, the term "pattern" refers to a particular arrangement of the crystalline oxidic compounds on the selective sites on the surface of the substrate, especially obtained by performing the digital printing process by using an appropriate printing device.

In a further aspect, the present invention relates to a crystalline oxidic compound which may be obtained by the method for manufacturing the crystalline oxidic compound comprising an alkaline metal and a valve metal as described elsewhere herein.

For further details concerning the crystalline oxidic compound, reference may be made to the description of the method for manufacturing the crystalline oxidic compound comprising an alkaline metal and a valve metal.

In a further aspect, the present invention relates to a use of a crystalline oxidic compound as obtained by the method for manufacturing the crystalline oxidic compound comprising an alkaline metal and a valve metal as described elsewhere herein. In particular, this crystalline oxidic compound can be used as a ferroelectric material; as a coating material for electrode materials in batteries, specifically in solid-state batteries; or in digital printing, especially on a polymeric substrate.

Some of the crystalline oxidic compounds which can be manufactured by using the method according to the present invention, such as lithium niobate, are known as ferroelectric materials. Particularly owing to the low ambient working temperatures, the method as proposed herein may facilitate integrating an element comprising a ferroelectric crystalline oxidic compound with at least one element selected from a semiconducting element, an electro-optical element or an acousto-optical element, preferably by placing at least two of these elements on the same substrate.

Further, the present method may contribute to solving a major drawback with respect to utilizing cathode materials as a result from a low interfacial stability between a cathode active material and an adjacent electrolyte. For example in high-voltage spinels, a presence of Mn³⁺ ions in the spinels may lead to the observed low interfacial stability, resulting in a considerably short cycling life of an electrochemical cell comprising high-voltage spinels. Due to a disproportionation reaction of the Mn³⁺ ions, the Mn²⁺ ions as obtained in this manner may dissolve into an adjacent electrolyte, thereby accelerating a capacity fade of the electrochemical cell. Such types of instabilities between the cathode active material and the adjacent electrolytes may also occur in solid-state batteries. However, an electrochemical performance of the cathode active materials can be considerably improved by protecting the surface of the cathode active material by depositing a coating layer thereon which comprises the crystalline oxidic compound, such as lithium niobate, being manufactured according to the method as proposed herein.

For further details concerning the use of the crystalline oxidic compound, reference may be made to the description of the method for manufacturing the crystalline oxidic compound comprising an alkaline metal and a valve metal.

The method according to the present invention as well as the crystalline oxidic compounds obtained by this method provide various advantages compared to the prior art, in particular:
(i) the crystalline oxidic compounds are obtainable at a low ambient working temperature, especially below 200 °C;
(ii) the method as proposed herein is reliable, can be performed in a straightforward fashion and does not require any complex arrangement;
(iii) the components used during the method are soluble in the same medium, thereby contributing to obtain crystalline oxidic compounds, which can, preferably, be used as a homogeneous coating;
(iv) using the solution during a coating process on substrates may contribute to obtaining more homogeneous and stable coatings on the substrate;
(v) the coating process can be used on a variety of different substrates, specifically on solid bodies, in particular electrode materials in batteries, especially cathode active materials, or polymeric substrates; or powdery substances;
(vi) especially owing to the composition of the reaction mixture during the coating process, the surface of the subtrate is, initially, activated and, subsequently, coated, thereby contribuing to more stable coatings and an improved contact to the substrate.

As used herein, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

### Short description of the Figures

Further optional features and embodiments of the invention are disclosed in more detail in the subsequent description of preferred embodiments, preferably in conjunction with the dependent claims. Therein, the respective optional features may be implemented in an isolated fashion as well as in any arbitrary feasible combination, as the skilled person will realize. It is emphasized here that the scope of the invention is not restricted by the preferred embodiments.

In the Figures:
- Figure 1: illustrates a comparison of XRD patterns of samples (**LN-2** and **LN -4**) as manufactured by the method according to the present invention and of other samples (**LN-1, LN-3,** and **LN-5**) as manufactured by a prior art method for comparison; and
- Figure 2: illustrates further XRD patterns for further samples manufactured similar to the sample **LN-2** in accordance with the present invention and differing from each other by a different molar ratio for Li:Nb; and
- Figure 3: illustrates scanning electron microscope (SEM) images for Li/Nb oxides attached to a Mylar surface (Fig. 3a) and a PE-ITO surface (Fig. 3b).

### Detailed description of the embodiments

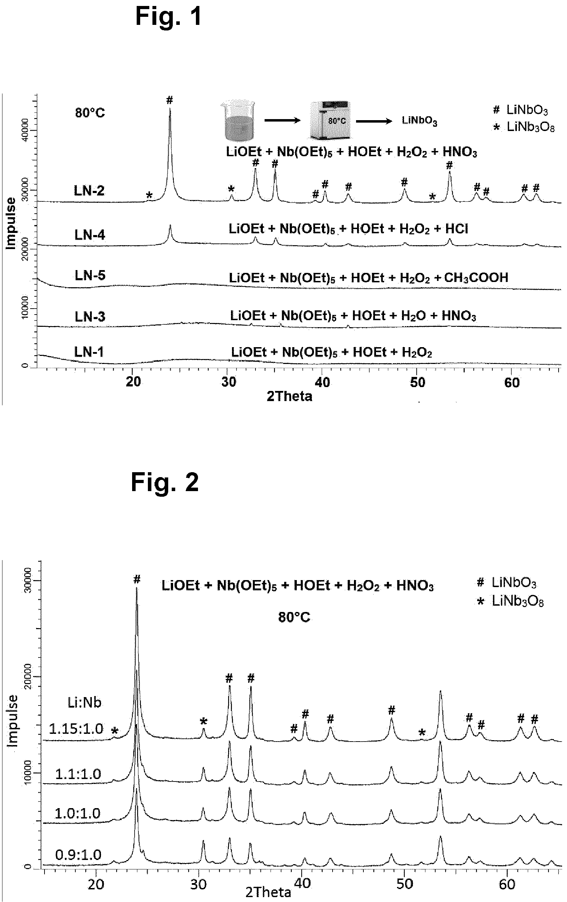

Especially for comparison between the method according to the present invention and other prior art methods for manufacturing a crystalline oxidic compounds, a number of samples denoted as **LN-1, LN-2, LN-3, LN-4,** and **LN-5,** each of which comprises lithium niobate, has been synthesized. As illustrated in Figure 1, it has, subsequently, been investigated by recording a respective XRD pattern of each sample whether a crystalline structure may occur in each sample or not.

For manufacturing the sample **LN-1,** the following steps have been performed. Lithium ethoxide (LiOEt) and niobium ethoxide (Nb(OEt)₅) in a molar ratio for Li:Nb of 1.15:1.00 have been mixed according to method step a) in a composition of absolute ethanol (HOEt) and an aqueous solution comprising 30 molar % of hydrogen peroxide (H₂O₂) at room temperature. As result, a clear and unhydrolized yellowish solution was obtained. Thereafter, the clear and unhydrolized yellowish solution was dried at 80 °C by using a drying cabinet having a fan for providing air circulation in accordance with method step c) immediately after both components had been dissolved, for which approx. 10 min have been required.

As illustrated in Figure 1, the respective XRD pattern of the sample **LN-1** indicates no diffraction reflexes and, thus, demonstrates an appearance of an amorphous state. As a result, the desired crystalline oxidic lithium niobate compound could not be synthesized at ambient working temperature by using the above-indicated prior art method. As demonstrated in further experiments (not depicted here), at higher working temperature above 400 °C, specifically at 450 °C or above, the desired crystalline oxidic lithium niobate compound could be obtained. Consequently, this observation is in agreement with the present invention since the sample **LN-1** was manufactured by omitting method step b), i.e. no acid was added to the clear solution at room temperature.

Further, the samples **LN-2** and **LN-4** were synthesized in accordance with the method as proposed herein. Accordingly, during method step b) a small quantity of concentrated nitric acid (HNO₃), specifically an aqueous solution comprising 65 molar % of HNO₃, was added to the clear and unhydrolized yellowish solution as obtained by step a) for the sample **LN-2,** while a small quantity of concentrated hydrochloric acid (HCl), specifically an aqueous solution comprising 35 molar % of HCl, was added to the clear and unhydrolized yellowish solution as obtained by step a) for the sample **LN-4.**

As further illustrated in Figure 1, the respective XRD patterns of both samples **LN-2** and **LN-4** indicate diffraction reflexes known for lithium niobate and, thus, demonstrate an occurrence of the desired crystalline oxidic lithium niobate compound which could be synthesized by using the method according to the present invention. As a result, this observation indicated that performing method step b) by using an acid selected from at least one of nitric acid or hydrochloric acid at room temperature is required for the method as disclosed herein. As can further be deduced from Figure 1, the diffraction reflexes for lithium niobate are, however, much more pronounced for the sample **LN-2** compared to the sample **LN-4,** thus, indicating that using nitric acid may be preferred to using hydrochloric acid in this particularly example of manufacturing lithium niobate. However, for further examples, different observations are expected.

Further, the sample **LN-5** was synthesized in a similar fashion as the samples **LN-2** and **LN-4,** wherein, however, a small quantity of glacial acetic acid was added to the clear and unhydrolized yellowish solution as obtained by step a) similar to step b). However, as further illustrated in Figure 1, the respective XRD pattern of the sample **LN-5** also indicates no diffraction reflexes and, thus, demonstrates an appearance of an amorphous state. As a result, the desired crystalline oxidic lithium niobate compound could not be synthesized by using an acetic acid instead of nitric acid (HNO₃) or hydrochloric acid (HCl).

Finally, the sample **LN-3** was synthesized in a similar fashion as the sample **LN-2,** wherein, however, an amount of water (H₂O) was used instead of the same amount of the aqueous solution comprising 30 molar % of hydrogen peroxide (H₂O₂) as used in the manufacturing of the sample **LN-2.** As further illustrated in Figure 1, the respective XRD pattern of the sample **LN-3** also indicates no diffraction reflexes and, thus, demonstrates an appearance of an amorphous state. As a result, the desired crystalline oxidic lithium niobate compound could not be synthesized by replacing hydrogen peroxide (H₂O₂) by water (H₂O). Apparently, providing hydrogen peroxide (H₂O₂) during method step a) is required for the method as disclosed herein.

Further, the person skilled in the art can reasonably assume that using Li methoxide or Li isopropoxide in combination with Nb methoxide or Nb isopropoxide in presence of hydrogen peroxide (H₂O₂) and at least one of nitric acid (HNO₃) or hydrochloric acid (HCl) at a temperature of 50 °C to below 200 °C may also result in the desired crystalline Li/Nb oxides.

Further, Figure 2 illustrates XRD patterns for a number of further samples, which have been manufactured similar to the sample **LN-2** in accordance with the method of the present invention, wherein, however, the further samples differ from each other by a different molar ratio for Li:Nb of 0.9:1.0, 1.0:1.0, 1.1:1.0 and 1.15:1.0.

As depicted in Figure 2, each of these further samples indicate diffraction reflexes known for two different phases of lithium niobate and, thus, demonstrate an appearance of both crystalline oxidic lithium niobate compounds. Herein, the diffraction reflex denoted by an asterisk (*) is known for the phase LiNb₃O₈, while the other diffraction reflexes are typical for the phase LiNbO₃.

From determining an intensity of the diffraction reflex denoted by an asterisk (*), a quantity of the phase LiNb₃O₈ within the oxidic lithium niobate crystals can be estimated. Using a Li:Nb molar ratio of 0.9: 1.0, the quantity of the phase LiNb₃O₈ can be estimated to approx. 32%, while using a Li:Nb molar ratio of 1.0:1.0 and 1.1:1.0 results in a decreased quantity of the phase LiNb₃O₈ of 14%, whereas the smallest quantity (∼ 6%) of the phase LiNb₃O₈ could be observed by using a Li:Nb molar ratio of 1.15:1.0, which corresponds to an excess of Li versus Nb of approx. 15 %. As a result, the molar ratio for Li:Nb can, preferably, be used for adjusting quantities of at least one particular crystalline phase within a mixture of different crystalline phases of the desired crystalline oxidic compound.

In particular, the crystalline oxidic compounds as proposed herein can be used as coating layers on cathode active materials in solid-state batteries. For this purpose, the solution as obtained by step b) was, prior to drying at 80°C according to step c), used for coating of various cathode active materials, specifically of LiNi_{0.5}Mn_{1.5}O₄, LiNi_{0.6}Mn_{0.2}Co_{0.2}O₂, and LiNi_{0.8}Mn_{0.1}Co_{0.1}O₂.

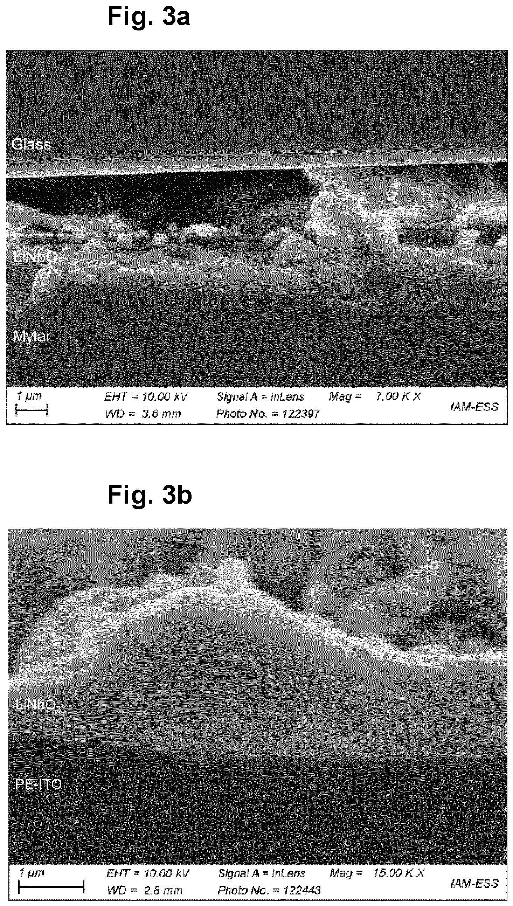

Further, various polymeric substrates could be coated with crystalline oxidic lithium niobate compounds. As polymeric substrates, the following materials have been used, i.e. biaxially-oriented polyethylene terephthalate (BoPET), available as "Mylar"; an indium tin oxide (ITO) coated polyester film, also denoted as "PE-ITO"; and a polyimide film, available as "Kapton". Figure 3 illustrates scanning electron microscope (SEM) images for Li/Nb oxides placed on a Mylar surface (Fig. 3a) or a PE-ITO surface (Fig. 3b), respectively. As an alternative, the person skilled in the art can reasonably assume that further types of natural polymers or synthetic polymers, in particular polyesters or polyimides, especially polymers having semiconducting properties, can be coated or printed by the method as disclosed herein. As described above in more detail, a portion of the solution can be placed to the surface of the substrate, thereby exerting digital printing. In this respect, the solution can be considered as a type of ink that can be used in a type of ink jet for digital printing.

Although no problems have occurred so far during performing the method according to the present invention, nevertheless, it is strictly advised to handle the mixtures as used in the proposed method with care. Especially, performing a synthesis, in which large quantities of HNO₃ and H₂O₂ are used, may cause explosive reactions.

## Claims

1. A method for manufacturing a crystalline oxidic compound comprising an alkaline metal and a valve metal, wherein the method comprises the following steps:
a) mixing an alcoholate of an alkaline metal and an alcoholate of a valve metal in a composition of an oxygenated organic solvent and hydrogen peroxide at room temperature;
b) adding an acid selected from at least one of nitric acid or hydrochloric acid at room temperature, whereby a solution is obtained;
c) drying the solution at an elevated temperature of 50 °C to 150 °C, whereby a powder comprising the at least one crystalline oxidic compound comprising the alkaline metal and the valve metal is obtained.

2. The method according to the preceding claim, wherein the alkaline metal is selected from at least one of Li, Na, or K.

3. The method according to any one of the preceding claims, wherein the valve metal is selected from at least one of Nb, Ti, V, Zr, Hf, or Ta.

4. The method according to any one of the preceding claims, wherein the alcoholate of the alkaline metal and the alcoholate of the valve metal are mixed at step a) in a Li:Nb molar ratio of 1.50:1.00 to 0.75:1.00.

5. The method according to any one of the preceding claims, wherein the oxygenated organic solvent provided at step a) is selected from at least one of an alcohol, a ketone, or an ether.

6. The method according to any one of the preceding claims, wherein the hydrogen peroxide provided at step a) is an aqueous solution comprising 10 to 50 molar % of the hydrogen peroxide.

7. The method according to any one of the preceding claims, wherein the composition provided at step a) comprises the oxygenated organic solvent and the hydrogen peroxide in a volume ratio of 5:1 to 0.2:1.

8. The method according to any one of the preceding claims, wherein an amount of the acid of 0.1 vol. % to 10 vol. % is added at step b).

9. The method according to any one of the preceding claims, wherein the solution as obtained at step b) is a clear solution.

10. The method according to any one of the preceding claims, wherein the elevated temperature for drying the solution at step c) is of 75 °C to 100 °C.

11. The method according to any one of the preceding claims, wherein the solution is applied to a surface of a substrate during step b) or after step b), wherein after drying the solution at step c) the crystalline oxidic compound is formed on the surface of the substrate.

12. The method according to any one of the preceding claims, wherein the solution is applied to selective sites on a surface of a substrate during step b) or after step b) by using a printing device, wherein after drying the solution at step c) a pattern of the crystalline oxidic compound is formed on the selective sites on the surface of the substrate.

13. The method according to any one of the preceding claims, wherein the powder obtained at step c) comprises the crystalline oxidic compound in a single-phase crystalline oxidic compound or at least two individual phases of the crystalline oxidic compound.

14. A crystalline oxidic compound comprising an alkaline metal and a valve metal as obtained by the method according to any one of the preceding claims.

15. A use of the crystalline oxidic compound comprising an alkaline metal and a valve metal according to the preceding claim as a ferroelectric material; as a coating material for electrode materials in batteries, specifically in solid-state batteries, or for powdery substances; or in digital printing, especially on polymeric substrates.
